# EUROPEAN PATENT APPLICATION

(11) **EP 2 557 651 A2**
(43) Date of publication of application: **13.02.2013**
(21) Application number: 11192069.0
(22) Date of filing: 06.12.2011
(51) Int. Cl.: H02J 7/00

(54) **Backup battery protection system.**

(30) Priority: 12.08.2011 TW 100128878
(71) Applicant: Askey Technology (Jiangsu) Ltd., Economic-Technological Development Area Wujiang Jiangsu (CN); Askey Computer Corp., New Taipei City 235 (TW)
(72) Inventor: Kao, Chia-Te, 300 Hsinchu City (TW); Hsieh, Ching-Feng, 108 Taipei City (TW)
(74) Representative: Ciceri, Fabio

(57) **Abstract**

A backup battery protection system for protecting a backup battery supplying power to a load includes a switch unit and an overdischarge protection module. The switch unit switches power supplied by the backup battery to the load. The overdischarge protection module shuts down the switch unit to stop the backup battery from discharging when voltage of the backup battery is lower than a first preset voltage and starts the switch unit when voltage of the backup battery increases to be higher than a second preset voltage after the discharging stop.

## Description

### FIELD OF THE INVENTION

The present invention relates to battery protection systems, and more particularly, to a backup battery protection system for determining controllably whether to allow a backup battery to supply power based on voltage of the backup battery.

### BACKGROUND OF THE INVENTION

Conventional batteries sustain irreversible damage and thus reduce a service life thereof when they overdischarge with a large current and deep discharge. Normally, an overdischarge protection device is connected between a conventional battery and a load for preventing the battery from overdischaring.

Conventional overdischarge protection devices each comprise a transistor that serves as a simple switch for controlling battery-based power supply. The transistor is ON or OFF for preventing the battery from overdischarging, depending on a detected voltage of the battery. Although detection of a low voltage of the battery triggers the shutdown of the battery to interrupt the power supply to the load, the voltage of the battery usually increases slightly after the battery has stopped supplying power. If the slight increase in the voltage of the battery exceeds a threshold value set by transistor, the transistor will become ON again, thereby causing the battery to supply power again. However, the output current thus initiated is usually large, so the battery voltage drops right away to become lower than the threshold value; as a result, the transistor becomes OFF again, thereby causing the battery to stop supplying power again. As revealed above, the prior art prevents a battery from overdischarging at the cost of increasing the number of instances of switching the battery to alternate between the OFF state and the ON state and the number of instances of alternately turning off and on the system (the load), thereby compromising the battery and destabilizing the system.

### SUMMARY OF THE INVENTION

It is an objective of the present invention to protect a backup battery and prevent the backup battery from being damaged because of overdischarge.

Another objective of the present invention is to reduce the number of instances of switching the backup battery to alternate between the OFF state and the ON state and thereby extend the service life of the backup battery.

In order to achieve the above and other objectives, the present invention provides a backup battery protection system for protecting a backup battery supplying power to a load. The backup battery protection system comprises a switch unit and an overdischarge protection module. The switch unit is connected between the backup battery and the load for switching power supplied by the backup battery to the load. The overdischarge protection module is connected between the backup battery and the switch unit and adapted to set at least a first preset voltage and a second preset voltage for controlling the switch unit based on voltage of the backup battery. The overdischarge protection module shuts down the switch unit to stop the backup battery from discharging when the voltage of the backup battery is lower than the first preset voltage and starts the switch unit to cause the backup battery to start discharging when the voltage of the backup battery increases to be higher than the second preset voltage after the discharging has stopped.

In an embodiment, the overdischarge protection module comprises a voltage dividing unit, a comparison unit, and a control unit. The voltage dividing unit is connected to the backup battery for dividing the voltage of the backup battery into a first voltage component and a second voltage component. The comparison unit is connected to the voltage dividing unit for comparing the first voltage component and the second voltage component with a standard voltage, generating a first comparison signal and a second comparison signal based on the comparison, and outputting the first comparison signal and the second comparison signal, wherein the first comparison signal indicates that whether the first voltage component is lower than the standard voltage affirms whether the voltage of the backup battery is lower than the first preset voltage, and the second comparison signal indicates that whether the second voltage component is higher than the standard voltage affirms whether the voltage of the backup battery is higher than the second preset voltage. The control unit is connected to the comparison unit and the switch unit. The control unit controllably drives the switch unit to switch power supplied by the backup battery to the load based on the first comparison signal and the second comparison signal.

In an embodiment, the control unit allows the switch unit to keep its state when the first comparison signal indicates that the voltage of the backup battery is higher than the first preset voltage and the second comparison signal indicates that the voltage of the backup battery is lower than the second preset voltage, and starts the switch unit when the first comparison signal indicates that the voltage of the backup battery is higher than the first preset voltage and the second comparison signal indicates that the voltage of the backup battery is higher than the second preset voltage.

In an embodiment, the load is a portable electronic device.

Accordingly, the present invention provides a backup battery protection system comprising an overdischarge protection module whereby a first voltage component and a second voltage component are compared with a standard voltage to therefore switch a switch unit based on a first comparison signal and a second comparison signal, thereby controlling ON and OFF states of supplying power from a backup battery to a load. Hence, the backup battery protection system of the present invention is effective in solving problems facing the prior art, namely shortening the service life of a battery and destabilizing a load system, as a result of switching the battery to alternate between an OFF state and an ON state.

### BRIEF DESCRIPTION OF THE DRAWINGS

Objectives, features, and advantages of the present invention are hereunder illustrated with specific embodiments in conjunction with the accompanying drawings, in which:

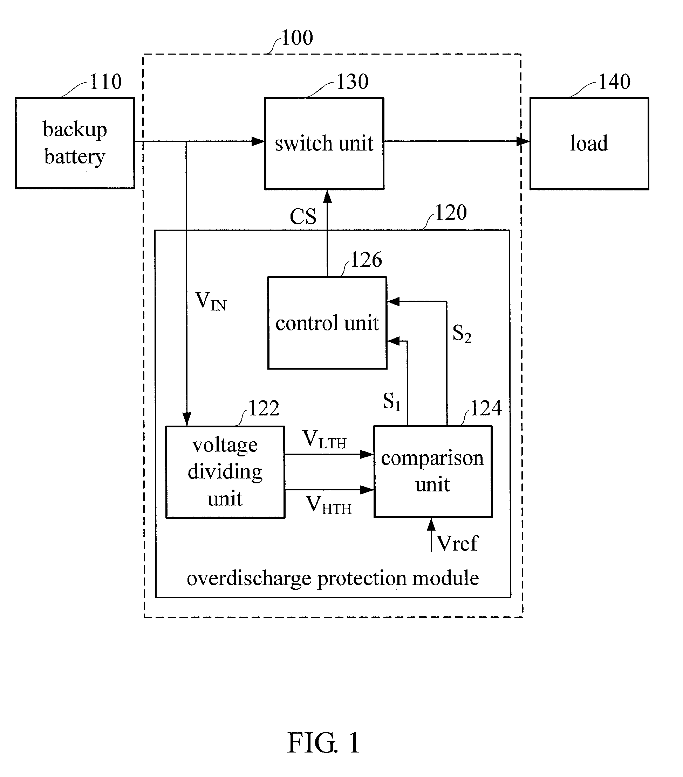

FIG 1 is a schematic view of a backup battery protection system in an embodiment of the present invention.

### DETAILED DESCRIPTION OF THE PREFERRED EMBODIMENTS

Referring to FIG 1, there is shown a schematic view of a backup battery protection system in an embodiment of the present invention. As shown in the diagram, a backup battery protection system 100 comprises an overdischarge protection module 120 and a switch unit 130. The backup battery protection system 100 is connected between a backup battery 110 and a load 140, such that power supply from the backup battery 110 is regulated by a protection mechanism adapted for the backup battery 110. The switch unit 130 is shut down to stop the backup battery 110 from discharging when voltage of the backup battery 110 is lower than a first preset voltage. The switch unit 130 does not start again until the voltage of the backup battery 110 increases to be higher than a second preset voltage after the backup battery 110 has stopped discharging.

The switch unit 130 is connected between the backup battery 110 and the load 140. The switch unit 130 is series-connected to a path along which the backup battery 110 supplies power to the load 140 for enabling (entering into an ON state of) or disabling (entering into an OFF state of) the power supply to the load 140. The overdischarge protection module 120 is connected between the backup battery 110 and the switch unit 130 for controlling the start (ON state) or shutdown (OFF state) of the switch unit 130 by detecting the voltage of the backup battery 110.

In an embodiment, the overdischarge protection module 120 comprises a voltage dividing unit 122, a comparison unit 124, and a control unit 126. In an embodiment, the comparison unit 124 and the control unit 126 are integrated to form an IC chip, whereas logical components, operational components, and electronic components are integrated to form an integrated circuit.

The comparison unit 124 is connected between the voltage dividing unit 122 and the control unit 126. The voltage dividing unit 122 is connected to the backup battery 110. Voltage V_{IN} of the backup battery 110 is supplied to the voltage dividing unit 122, and then the voltage dividing unit 122 divides the Voltage V_{IN} into a first voltage component V_{LTH} and a second voltage component V_{HTH} before sending them to the comparison unit 124. The first voltage component is deemed a low-voltage threshold, and the second voltage component is deemed a high-voltage threshold.

The overdischarge protection module 120 has a standard voltage V_{ref}. For example, once the IC chip which comprises the comparison unit 124 and the control unit 126 starts to operate, the IC chip will generate the default standard voltage V_{ref}. The way of setting the standard voltage V_{ref} is not described in detail herein for the sake of brevity, because persons skilled in the art are so familiar with it that they can readily understand it and accomplish it by making reference to the technical features of the present invention.

The comparison unit 124 compares the first voltage component V_{LTH} with the standard voltage V_{ref} to generate a first comparison signal S₁, and compares the second voltage component V_{HTH} with the standard voltage V_{ref} to generate a second comparison signal S₂. The first comparison signal S₁ indicates whether the voltage V_{IN} of the backup battery 110 is lower than the first preset voltage. The second comparison signal S₂ indicates whether the voltage V_{IN} of the backup battery 110 is higher than the second preset voltage. In an embodiment, the second preset voltage is set to be higher than the first preset voltage.

In an embodiment of the present invention, for example, the comparison unit 124 consists of two operational amplifiers (not shown). One of the operational amplifiers compares the first voltage component V_{LTH} with the standard voltage V_{ref} and outputs the first comparison signal S₁ based on the result of the comparison. The other one of the two operational amplifiers compares the second voltage component V_{HTH} with the standard voltage V_{ref} and outputs the second comparison signal S₂ based on the result of the comparison. The control unit 126 can be an R-S flipflop. The control unit 126 generates and sends out a control signal CS based on the received first comparison signal S₁ and the received second comparison signal S₂ for controlling the switch unit 130. The switch unit 130 is a transistor with three legs, one connected to the backup battery 110 for receiving power therefrom, another connected to the load 140 for conveying power from the backup battery 110 to the load 140, and the last one, also known as the control leg, connected to the control unit 126 for receiving the control signal CS whereby the start (ON state) or shutdown (OFF state) of the switch unit 130 is controlled.

In the aforesaid embodiments, the backup battery 110 can be a primary battery or a secondary battery. The primary battery is exemplified by a zinc-carbon battery, an alkaline battery, or a mercury battery. The secondary battery is exemplified by a lithium cell, a nickel-cadmium battery (NiCd battery), a nickel-metal hydride battery (NiMH battery), a lead-acid battery, a fuel cell, or a solar cell.

In an embodiment of the present invention, the backup battery 110 is a 3-cell lithium battery with a voltage of 3.6V The standard voltage V_{ref} of the overdischarge protection module 120 is set to 1.24V, wherein the first preset voltage is set to 3.1V and the second preset voltage to 3.4V.

With the backup battery 110 operating at voltage V_{IN} of 3.6V, that is, at the voltage V_{IN} higher than the first preset voltage (3.1V) and the second preset voltage (3.4V), the first comparison signal S₁ and the first comparison signal S₂ together cause the switch unit 130 to enable the path along which the backup battery 110 supplies power to the load 140.

Once the voltage V_{IN} of the backup battery 110 dwindles and falls with the range of 3.1V∼3.4V, that is, at the voltage V_{IN} not lower than the first preset voltage (3.1V), the switch unit 130 will enable the path along which the backup battery 110 supplies power to the load 140, even though the first comparison signal S₂ indicates that the voltage V_{IN} of the backup battery 110 is lower than the second preset voltage (3.4V).

If the voltage V_{IN} of the backup battery 110 is lower than the first preset voltage (3.1V), the first comparison signal S₁ from the comparison unit 124 will indicate that the voltage V_{IN}s of the backup battery 110 is lower than the first preset voltage (3.1V). The control signal CS of the control unit 126 causes the switch unit 130 to shut down, such that the voltage V_{IN} of the backup battery 110 is no longer supplied to the load 140.

If the control unit 126 sends out the control signal CS for controlling the shutdown of the switch unit 130 such that the voltage V_{IN} of the backup battery 110 is no longer supplied to the load 140, the voltage V_{IN} of the backup battery 110 will gradually increase to be higher than the first preset voltage (3.1V) but will still be lower than the second preset voltage (3.4V); meanwhile, the first voltage component V_{LTH} is higher than the standard voltage V_{ref}(1.24V), and the second voltage component V_{HTH} is lower than the standard voltage V_{ref}. The first comparison signal S₁ and the second comparison signal S₂ cause the control unit 126 to maintain the status quo of the switch unit 130.

Afterward, the control unit 126 keeps the switch unit 130 shut down all the time. If the voltage V_{IN} of the backup battery 110 increases to be higher than the second preset voltage, the first voltage component V_{LTH} (3.1V) will be higher than the standard voltage V_{ref}(1.24V), and the second voltage component V_{HTH} (3.4V) will be higher than the standard voltage V_{ref}. The first comparison signal S₁ and the second comparison signal S₂ together cause the control unit 126 to controllably drive the switch unit 130 to restart, such that the backup battery 110 keeps supplying power to the load 140.

For example, the aforesaid judgment of the first comparison signal S₁ and the second comparison signal S₂ can be brought about by setting the result of various logical combinations, using a S-R latch.

In this embodiment, with the backup battery being a 3-cell lithium battery (1.2V × 3 = 3.6V), if the lithium battery discharges deeply and its voltage is less than 3V, the backup battery 110 is likely to be damaged. To avoid this phenomenon, in the aforesaid embodiment, it is feasible to set the first preset voltage to 3.1V for protecting the backup battery 110 against overdischarge. The aforesaid first preset voltage (3.1V) and second preset voltage (3.4V) are set according to the specifications of the backup battery 110. The first preset voltage level and the second preset voltage level can be set by the user as need, and their voltage components are determined by the voltage dividing unit 122 and, for example, by means of resistance-based division. For example, the first voltage component V_{LTH} generated by subjecting a preset voltage of 3.1V to the voltage dividing unit 122 has to equal the standard voltage V_{ref}(1.24V). Likewise, the second voltage component V_{HTH} generated by subjecting a preset voltage of 3.4V to the voltage dividing unit 122 has to equal the standard voltage V_{ref} (1.24V) too. In doing so, the resistance of the voltage dividing unit 122 can be determined. The outcome is: if voltage applied to the voltage dividing unit 122 is larger than 3.4V, the resultant first voltage component V_{LTH} will be larger than 1.24V for certain, and the resultant second voltage component V_{HTH} will be larger than 1.24V for certain; if the applied voltage is less than 3.4V, the resultant first voltage component V_{LTH} will be larger than 1.24V for certain, and the resultant second voltage component V_{HTH} will be less than 1.24V for certain; if the applied voltage is less than 3.1V, the resultant first voltage component V_{LTH} will be less than 1.24V for certain, and the resultant second voltage component V_{HTH} will be less than 1.24V for certain. Hence, both the first comparison signal S₁ and the first comparison signal S₂ can be defined, so as to control the control unit 126.

The present invention provides the backup battery protection system 100 that comprises the overdischarge protection module 120 for determining whether the voltage V_{IN} of the backup battery 110 is lower than the first preset voltage or higher than the second preset voltage so as to give optimal protection for the backup battery 110, prevent the backup battery 110 from overdischarging, and extend its service life.

The present invention is disclosed above by preferred embodiments. However, persons skilled in the art should understand that the preferred embodiments are illustrative of the present invention only, but should not be interpreted as restrictive of the scope of the present invention. Hence, all equivalent modifications and replacements made to the aforesaid embodiments should fall within the scope of the present invention. Accordingly, the legal protection for the present invention should be defined by the appended claims.

## Claims

1. A backup battery protection system for protecting a backup battery supplying power to a load, the backup battery protection system comprising:
a switch unit connected between the backup battery and the load for switching power supplied by the backup battery to the load; and
an overdischarge protection module connected between the backup battery and the switch unit and adapted to set at least a first preset voltage and a second preset voltage for controlling the switch unit based on voltage of the backup battery, wherein the overdischarge protection module shuts down the switch unit to stop the backup battery from discharging when the voltage of the backup battery is lower than the first preset voltage and starts the switch unit to cause the backup battery to start discharging when the voltage of the backup battery increases to be higher than the second preset voltage after the discharging has stopped.

2. The backup battery protection system of claim 1, wherein the overdischarge protection module comprises:
a voltage dividing unit connected to the backup battery for dividing the voltage of the backup battery into a first voltage component and a second voltage component;
a comparison unit connected to the voltage dividing unit for comparing the first voltage component and the second voltage component with a standard voltage, generating a first comparison signal and a second comparison signal based on the comparison, and outputting the first comparison signal and the second comparison signal, wherein the first comparison signal indicates that whether the first voltage component is lower than the standard voltage affirms whether the voltage of the backup battery is lower than the first preset voltage, and the second comparison signal indicates that whether the second voltage component is higher than the standard voltage affirms whether the voltage of the backup battery is higher than the second preset voltage; and
a control unit connected to the comparison unit and the switch unit and adapted to controllably drive the switch unit to switch power supplied by the backup battery to the load based on the first comparison signal and the second comparison signal.

3. The backup battery protection system of claim 2, wherein the control unit shuts down the switch unit when the first comparison signal indicates that the voltage of the backup battery is lower than the first preset voltage, allows the switch unit to keep its state when the first comparison signal indicates that the voltage of the backup battery is higher than the first preset voltage and the second comparison signal indicates that the voltage of the backup battery is lower than the second preset voltage, and starts the switch unit when the first comparison signal indicates that the voltage of the backup battery is higher than the first preset voltage and the second comparison signal indicates that the voltage of the backup battery is higher than the second preset voltage.

4. The backup battery protection system of claim 1, wherein an operating voltage of the backup battery is 3.6V, the first preset voltage is 3.1V, and the second preset voltage is 3.4V

5. The backup battery protection system of claim 3, wherein the standard voltage is 1.24V

6. The backup battery protection system of claim 1, wherein the load is a portable electronic device.
